**Europäisches Patentamt**

**European Patent Office**

**Office européen des brevets**

(11) Veröffentlichungsnummer: **0 513 609 A2**

# EUROPÄISCHE PATENTANMELDUNG

(21) Anmeldenummer: **92107502.4**

(51) Int. Cl.⁵: **H04M 11/06**

(22) Anmeldetag: **04.05.92**

(30) Priorität: **16.05.91 DE 4116057**

(43) Veröffentlichungstag der Anmeldung:
**19.11.92 Patentblatt 92/47**

(84) Benannte Vertragsstaaten:
**AT BE CH ES FR GB IT LI NL**

(71) Anmelder: **SIEMENS AKTIENGESELLSCHAFT**
**Wittelsbacherplatz 2**
**W-8000 München 2(DE)**

(72) Erfinder: **Kaufmann, Peter, Ing.-grad.**
**Stäudlweg 1d**
**W-8031 Gilching(DE)**

(54) **Fernmeldeendgerät mit optischer Anzeigeeinrichtung.**

(57) Das erfindungsgemäße Fernmeldeendgerät weist eine Schnittstelle (RS232) zu einer externen Datenverarbeitungseinrichtung (PC) auf.

Ein Prozessor des Endgeräts greift den Signalzustand an der Schnittstelle (RS232) ab, bildet signalzustandsindividuelle Informationen und führt diese der optischen Anzeigeeinrichtung (DPL) des Fernmeldeendgeräts (T) zu. Die Anzeigeeinrichtung (DPL) dient neben der Darstellung der signalzustandsindividuellen Informationen zugleich der Darstellung von Bedienerführungsinformationen.

FIG 2

Die Erfindung betrifft ein Fernmeldeendgerät nach dem Oberbegriff des Patentanspruchs 1.

Datenverarbeitungseinrichtungen, wie beispielsweise Personal Computer, unterstützen in zunehmendem Maß den Betrieb von Fernmeldeendgeräten. Durch die Ankopplung einer Datenverarbeitungseinrichtung an ein Fernmeldeendgerät lassen sich die durch das betreffende Endgerät erzeugbaren Funktionen erheblich ergänzen. Dabei kann das jeweilige Fernmeldeendgerät mit einem integrierten Modern zur Datenübertragung auf digitalen oder auch analogen Teilnehmeranschlußschaltungen ausgestattet sein.

Die Ankopplung einer externen Datenverarbeitungseinrichtung an einer Schnittstelle bzw. über Schnittstellenleitungen erfordert einen regelmäßigen, mindestens jedoch einen bei Funktionsstörungen vorzunehmenden Test der Schnittstelle bzw. der Schnittstellenleitungen. Zum Test von V.24-Signalleitungen werden beispielsweise Schnittstellentestgeräte ("Interface Tester", "Break-Out Boxes") der Firma Wandel & Goltermann verwendet, die in die V.24-Leitungen eingeschleift werden. Der Signalzustand auf den jeweiligen V.24-Leitungen wird durch lichtemittierende Dioden angezeigt.

Der Erfindung liegt die Aufgabe zugrunde, ein Fernmeldeendgerät der eingangs genannten Art anzugeben, das dem Benutzer des Fernmeldeendgerätes jederzeit ohne besondere Zusatzeinrichtungen Informationen über die Signalzustände an der Schnittstelle zur Verfügung stellt.

Die Lösung dieser Aufgabe erfolgt erfindungsgemäß mit den Merkmalen des Patentanspruchs 1.

Als wesentlich für die Erfindung ist anzusehen, daß die Signalzustände an der Schnittstelle zu der externen Datenverarbeitungseinrichtung auf dem Display des Fernmeldeendgeräts anzeigbar sind. Dieses Display dient bereits der Bedienerführung, wobei beispielsweise bei der Rufnummernwahl die gewählte Rufnummer angezeigt wird oder bei ankommenden internen Rufen die Rufnummer und der Name des anrufenden internen Teilnehmers angezeigt wird. Das vorhandene Display des Fernmeldeendgeräts wird also einer erweiterten Nutzungsmöglichkeit zugeführt. Als besonders vorteilhaft ist dabei anzusehen, daß die Anzeige der Schnittstellensignalzustände gegenüber der Verwendung separater Schnittstellentestgeräte ohne zusätzliche Hardwareeinrichtungen erfolgt. Erfindungsgemäß lassen sich die Signalzustandsinformationen in einfacher Weise durch Betätigung von Tasten am Fernmeldeendgerät abfragen und übersichtlich darstellen.

Die im Zusammenhang mit der Anzeige der Schnittstellensignalzustandsinformationen erforderlichen Prozeduren können dabei von nur einem Prozessor vorgenommen werden, der auch weitere Funktionen im Fernmeldeendgerät steuert. Alternativ können die zur Darstellung der Schnittstellensignalzustandsinformationen erforderlichen Prozeduren von zwei zusammenwirkenden Prozessoren realisiert werden, wobei insbesondere der zweite Prozessor ebenfalls der Realisierung weiterer Funktionen im Fernmeldeendgerät dient. Hierzu gehört die Realisierung der Schnittstellen zu der externen Datenverarbeitungseinrichtung.

Weitere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

FIG 1   das Fernmeldeendgerät gemäß der Erfindung mit einer integrierten Anpassungseinrichtung und einer über eine Schnittstelle verbundene "externe" Datenverarbeitungseinrichtung;

FIG 2   die schaltungstechnische Ausgestaltung des Fernmeldeendgeräts nach FIG 1;

FIG 3   die Softwarearchitektur des Fernmeldeendgeräts gemäß der Erfindung;

FIG 4   die schaltungstechnische Ausgestaltung einer Endgeräteanpassungseinrichtung nach FIG 1;

FIG 5   die Softwarearchitektur der Einrichtung nach FIG 4, und

FIG 6   die optische Anzeigeeinrichtung des Fernmeldeendgeräts mit der Anzeige von Schnittstellensignalzustandsinformationen.

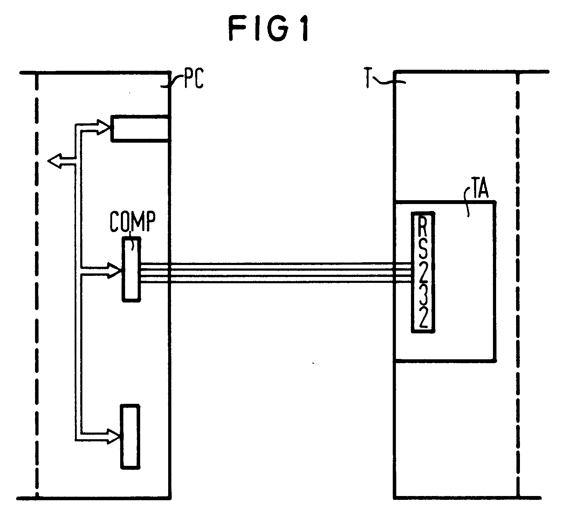

In FIG 1 ist schematisch die Zuordnung eines Fernmeldeendgerätes T zu einer externen Datenverarbeitungseinrichtung PC dargestellt. Das Endgerät T ist insbesondere ein Fernsprechendgerät für digitale Teilnehmeranschlußleitungen. Das Endgerät T weist eine integrierte Anpassungseinrichtung TA (Terminal Adapter) auf, die eine Schnittstelle, insbesondere eine der amerikanischen Schnittstellennorm RS232 entsprechende Schnittstelle bzw. eine V.24-CCITT-Schnittstelle, bildet. In FIG 1 sind lediglich beispielhaft vier Schnittstellenleitungen dargestellt, die die Anpassungseinrichtung TA des Endgeräts T mit der externen Datenverarbeitungseinrichtung PC verbinden.

Die externe Datenverarbeitungseinrichtung PC weist eine Datenschnittstelle COMP (COM-Port) auf, wie sie in handelsüblichen Personalcomputern standardmäßig vorhanden ist. Ausgelöst durch Anreizsignale, die entweder in die externe Datenverarbeitungseinrichtung PC oder in das Endgerät T eingegeben werden, bildet die Datenverarbeitungseinrichtung PC Daten, die beispielsweise der Schnittstellennorm RS232 bzw. V.24 entsprechen.

Das Fernmeldeendgerät gemäß der Erfindung ist vorzugsweise mit Standardchips ausgestattet.

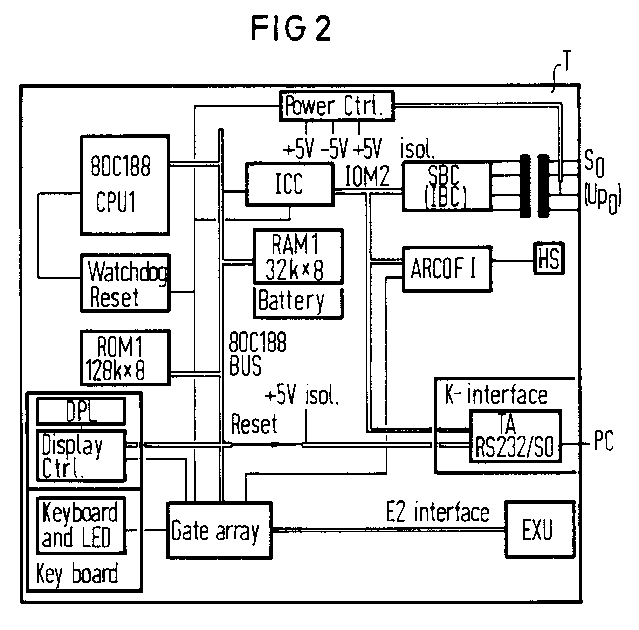

Derartige Standardchips sind beispielsweise in der Zeitschrift Electronic 13/22.6.1990, Seiten 52 bis 56 (Lemme: "ISDN-Endgeräte mit Minimum an Chips") sowie in der Zeitschrift "Siemens Components 28" (1990), Heft 4, Seiten 123 bis 126 (Kuhn/Bry: "IC-Familie für optimierte ISDN-Endgeräte") beschrieben. Das erfindungsgemäße Fernmeldeendgerät, das insbesondere als ISDN-Endgerät ausgebildet ist, weist eingangsseitig (in FIG 2 rechts oben) eine So-Schnittstelle auf, die mit einem Trennübertrager zur galvanischen Trennung von der Leitung verbunden ist. Das Endgerät T wird vom Netzabschluß her mit der erforderlichen Speisespannung von beispielsweise 40 V versorgt. Ein Wandler POWER Ctrl. setzt die Gleichspannung ebenfalls mit einem Trennübertrager auf +5 V, -5 V und von der Telefonleitung galvanisch getrennte +5 V (isoliert) herab. Die genannten Spannungen werden - wie in FIG 2 bzw. FIG 5 dargestellt - den einzelnen Komponenten der in FIG 2 bzw. FIG 5 dargestellten Schaltungsanordnung zugeführt.

Die dem eingangsseitigen Trennübertrager nachgeordnete Komponente SBC wird insbesondere durch einen Chip der Firma Siemens mit der Produktbezeichnung PEB2080/81 gebildet. Bei dieser Komponente handelt es sich um einen CCITT-kompatiblen Schicht-1-Baustein für die S/T-Schnittstelle. Mit diesem Baustein SBC sind die weiteren Bausteine ICC, ARCOFI und die Anpassungseinrichtung TA, die noch anhand der weiteren Figuren beschrieben wird, verbunden. Die Verbindung erfolgt durch die standardisierte IOM-2-Schnittstelle, die eine 4-Draht-Schnittstelle ist und aus bis zu acht Kanälen besteht, die im Zeitmultiplexbetrieb übertragen werden. Sie basiert auf der ISDN-orientierten modularen IOM-Schnittstelle und besteht aus zwei Datenleitungen (DU = Data Upstream, DD = Data Downstream) und zwei Taktsignalen (DCL = Data Clock, FSC = Frame Synchronization). Im sogenannten Terminal-Mode setzt sich das IOM-2-Interface aus drei Kanälen zusammen. Jeder dieser Kanäle besteht aus vier Oktetten. Kanal "Q" enthält die ISDN-Nutzdaten (B1 + B2 + D-Kanal) sowie Überwachungs- und Steuerdaten (Monitor und C/I) für die Schicht-1-Bausteine. Im Kanal "1" befinden sich zwei Interkommunfkationskanäle IC mit je 64 kBit/s sowie ein Monitor und C/I-Kanal. Dieser kann zur Steuerung von bestimmten Modulen im Endgerät, z. B. dem Sprachteil ARCOFI, verwendet werden. Der dritte Kanal kann für Buszugriffsprozeduren über den C/I-Kanal verwendet werden, wobei restliche Kapazität für weitere Applikationen reserviert ist.

Der mit dem Baustein SBC über die Schnittstelle IOM2 verbundene Baustein ICC ist ein sogenannter ISDN-Communication-Controller, der beispielsweise von der Firma Siemens mit der Produktbezeichnung PEB2070 geliefert wird. Es handelt sich dabei um einen 1-Kanal-HDLC-Controller mit zwei 64-byte-FIFO-Speichern.

Der Baustein SBC kann auch durch einen Baustein IBC, der beispielsweise mit der Produktbezeichnung PEB2095 von der Firma Siemens geliefert wird, ersetzt werden, womit dann eine Zweidraht-UPO-Schnittstelle für das Fernmeldegerät gebildet wird. Die Verbindung mit den weiteren Bausteinen ICC, ARCOFI und ITAC in der Anpassungseinrichtung TA erfolgt in gleicher Weise wie beim SBC. Der Baustein SBC kann auch mit dem Baustein ICC zu einem Baustein ISAC-S, wie er unter der Produktbezeichnung PEB2085 von der Firma Siemens geliefert wird, zusammengefaßt sein. Die Schnittstelle zu den weiteren Bausteinen bleibt, wie beschrieben, unverändert. Das gleiche gilt für den Baustein IBC, der mit dem ICC zusammengefaßt den Baustein ISAC-P bildet, wie er unter der Produktbezeichnung PEB20950 von der Firma Siemens angeboten wird.

Der Baustein ARCOFI (Audio Ringing Codec Filter) sendet und empfängt PCM-codierte Sprache in einem der beiden B-Kanäle. In dem Baustein ARCOFI sind die Funktionen "Tonruf-MFV-Generator" und "Verstärker" integriert. Gegebenenfalls kann dieser Baustein mit einer an sich bekannten Einrichtung (Hands Free Unit) für einen Freisprechbetrieb verbunden sein.

Das Endgerät T weist ferner ein übliches Prozessorsystem mit einem Bussystem (80C188-Bus) auf, das gebildet ist aus

- einem Prozessor CPU1, der insbesondere ein Prozessor der Firma Siemens mit der Produktbezeichnung 80C188 sein kann,
- einem Programmspeicher mit 128 kB CMOS-Speicher ROM1,
- einem 32 kB statischen CMOS-Speicher RAM1, das batteriegepuffert ist,
- einer an sich bekannten, sogenannten Watchdog- und Reset-Logik, und
- einem Baustein "Gatearray", der die üblicherweise in einem derartigen Prozessorsystem notwendigen Puffer und Ein-/Ausgabe-(I/O)-Treiber zusammenfaßt.

Der Baustein "Gatearray" enthält insbesondere auch einen Serien-/ Parallel-Umsetzer, der eine serielle Schnittstelle "E2 interface" zu einem Erweiterungsgerät EXU steuert, das z. B. ein Namentaster sein kann. An die Puffer des Bausteins "Gatearray" ist auch eine Steuereinheit DISPLAY Ctlr. angeschlossen, die die optische Anzeigeeinrichtung DPL des Endgeräts T steuert, sowie eine Einrichtung "Keyboard and LED", die eine Bedieneinheiteingabeeinrichtung (Keyboard) und eine Ausgabeeinrichtung LED mit Anzeigeelementen in Form von lichtemittierenden Dioden umfaßt.

Das oben beschriebene IOM2 Interface zusammen mit einer vom Prozessor CPU1 steuerbaren Resetleitung und den oben erwähnten 5 V isoliert bilden die sogenannte K-Schnittstelle (K-Interface), über die die Anpassungseinrichtung TA an das Endgerät T angeschlossen ist und von dessen Prozessor CPU1 gesteuert werden kann.

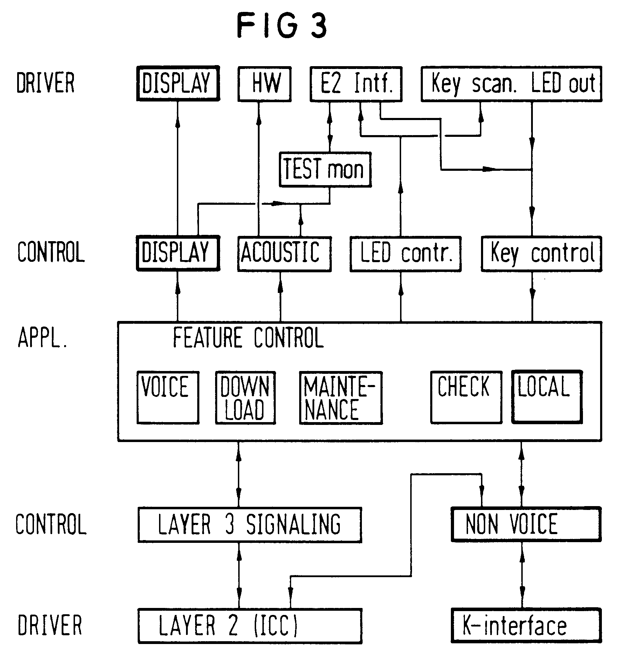

Die Softwarearchitektur des Endgeräts T ist in FIG 3 schematisch dargestellt. Die Softwarekomponenten, die an der Realisierung der erfindungsgemäßen Funktionen beteiligt sind, sind durch Kästchen mit verstärkten Rändern dargestellt. Das Softwaresystem besteht im wesentlichen aus

- einer Applikationsebene für die Telefonsteuerung (VOICE),
- die Steuerung des Ladens von Parametern aus dem System (DOWNLOAD),
- einer Selbsttestfunktion (MAINTENANCE),
- einer Steuerung der Speicherfunktion lokaler Namentasten (CHECK), und insbesondere
- einer Steuerung lokaler Funktionen (LOCAL), wie z. B. das erfindungsgemäße Abbilden der Signalzustände an der Schnittstelle zur Anpassungseinrichtung TA.

Um die Applikationsebene herum gibt es logische (CONTROL) und physikalische (DRIVER) Ein-/Ausgabesteuerungen, insbesondere die Steuerung des K-Interfaces (K-Interface und NON VOICE) und die logische und physikalische Steuerung des Displays (DISPLAY).

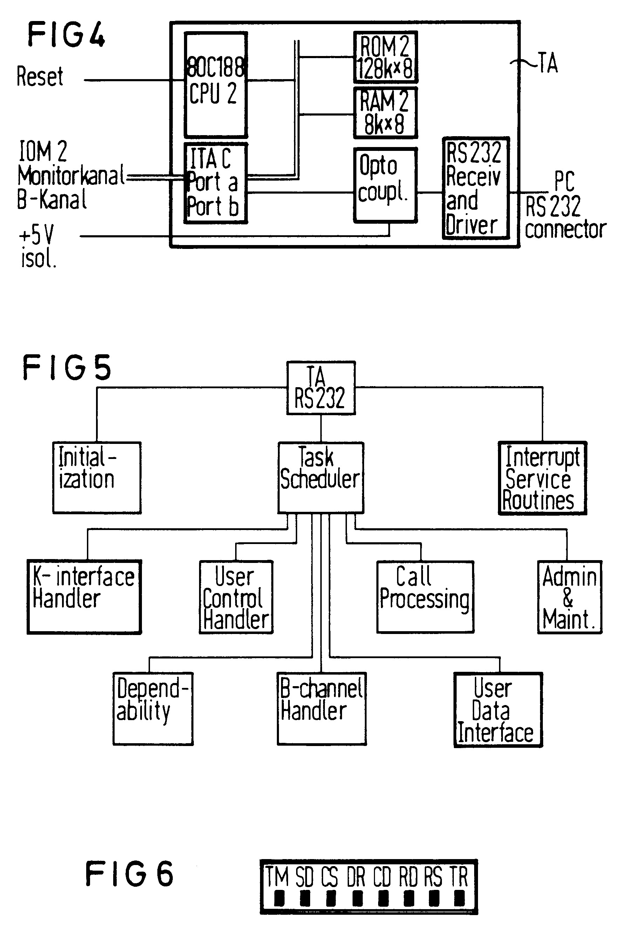

FIG 4 zeigt schematisch den schaltungstechnischen Aufbau der Anpassungseinrichtung TA des Endgeräts T. Kernstück der Einrichtung TA bildet der zweite Prozessor CPU2, der ebenfalls durch einen Prozessor der Firma Siemens mit der Produktbezeichnung 80C188 gebildet sein kann. Dem zweiten Prozessor CPU2 sind ein Programmspeicher ROM2 und ein Speicher RAM2 zugeordnet. Ferner steht der zweite Prozessor CPU2 mit einem Baustein ITAC über einen Datenbus in Verbindung. Dieser Baustein ITAC, der insbesondere durch das Produkt der Firma Siemens mit der Bezeichnung PSB2110 gebildet wird, enthält zwei Serien-/Parallel-Umsetzer, wobei einer die V.24-Seite mit bis zu 19,2 kBits/s und der andere das bitratenadaptierte Signal auf dem B-Kanal mit 64 kBits/s steuert. Der Baustein ITAG unterstützt die Software bei der Bitratenadaption nach den Standards V.110, V.120 oder DMI-Mode 2. Der Baustein ITAG ist an den IOM2-Bus des K-Interfaces angeschlossen. Er hat damit den Zugang zu beiden B-Kanälen und ermöglicht insbesondere dem Prozessor CPU2 den Zugang zum Monitorkanal. Der Baustein ITAC ist weiterhin mit einem optoelektrischen Koppler (Opto coupl.) verbunden, der in Sende- und Empfangsrichtung (ausgehend von der externen Dateneinrichtung bzw. vom Terminal T) für jede Signalleitung eine optoelektrische bzw. elektrisch-optische Umwandlung und damit galvanische Trennung realisiert. Dem Koppler ist eine an sich bekannte RS232-Empfangs- und -Treiberschaltung (RS232 Receive and Driver) nachgeschaltet. Diese führt zu der externen Datenverarbeitungseinrichtung PC (vgl. FIG 1).

FIG 5 zeigt schematisch die Softwarearchitektur der Anpassungseinrichtung TA, wobei wiederum die Systemkomponenten, die an der Realisierung der erfindungsgemäßen Funktionen beteiligt sind, durch Kästchen mit verstärkten Rändern dargestellt sind.

Im wesentlichen besteht die Software aus einer Ablaufsteuerung (Task Scheduler) und einem Satz von Interrupt-Steuerungen (Interrupt Service Routines), die die Hardware-Interrupts behandeln. Die einzelnen Tasks, die von der Ablaufsteuerung aufgerufen werden, sind

- die Verwaltung der Download-Parameter und Selbsttestroutine (Administration und Maintenance),
- die Steuerung des D-Kanals und damit der Fernmeldeverbindung (Call Processing),
- die Steuerung der RS232- bzw. V.24-Schnittstelle (User Data Interface),
- die Steuerung der Bitratenadaption auf dem B-Kanal (B-channel Handler),
- die Fehlerverwaltung und Steuerung (Dependability),
- die Steuerung der Kommandos auf der V.24-Schnittstelle zur Steuerung der Datenverbindung durch die angeschlossene Datenendeinrichtung (User Control Handler), und insbesondere
- die Steuerung der K-Schnittstelle (K-Interface Handler), welche die Kommunikation des Prozessors CPU2 mit dem Prozessor CPU1 über den Monitorkanal des IOM2-Busses steuert.

Zur weiteren Veranschaulichung der Erfindung wird auf die FIG 2 bis 5 verwiesen.

Ein in die Bedieneinheit "Keyboard (FIG 2)" des Endgeräts T eingegebenes Anreizsignal zur Anzeige der V.24-Signalzustände wird vom Prozessor CPU1 erkannt und der Steuerung der Lokalfunktionen (LOCAL, FIG 3) zugeführt. Die Lokalsteuerung wird dadurch in einen besonderen Zustand versetzt und bildet eine Meldung, die über die Steuerung des K-Interfaces (NON VOICE und K-Interface, FIG 3) byteseriell über den Monitorkanal des IOM2-Busses an den Baustein ITAC der Anpassungseinrichtung TA (FIG 4) gesendet wird. Jedes Byte führt hier zu einem Interrupt, der durch die Interrupt-Steuerung (Interrupt Service Routines, FIG 5) des Prozessors CPU2 erkannt wird und der Auswertefunktion (K-Interface Handler, FIG 5) zugeführt wird. Nach Erkennen der Meldung wird im Prozessor CPU2 die V.24-Steuerung (User Data Interface, FIG 5), die den Zustand der V.24-Signalleitungen zu jeder Zeit kennt, in einen entsprechenden Zustand versetzt, der dazu führt, daß jede Änderung der Signalzustände zu einer Meldung zusammengestellt wird, die in umgekehrter Richtung über die Komponente "K-Interface Handler" (FIG 5) und das IOM2-Bussystem dem Prozessor CPU1 (FIG 2) gesendet wird. Dort wird die Meldung von der Steuerung der K-Schnittstelle (K-Interface und NON VOICE, FIG 3) empfangen und der Lokalsteuerung (LOCAL, FIG 3) zugeführt, die aufgrund des eingestellten Zustandes die Displaysteuerung DISPLAY (FIG 3) aufruft und damit den Signalzustand auf der Displayeinrichtung DPL (FIG 2) abbildet. Dies wird solange fortgesetzt, bis der Benutzer ein zweites Anreizsignal zum Ausschalten des Signalzustandes in die Bedieneinheit des Endgeräts T eingibt.

Das aus den Prozessoren CPU1 und CPU2 bestehende Prozessorsystem greift also Signalzustände an der Schnittstelle Fernmeldeendgerät T (Anpassungseinrichtung TA)/externe Datenverarbeitungseinrichtung PC ab, bildet signalzustandsindividuelle Informationen und führt diese der optischen Einrichtung DPL zu, wo die signalzustandsindividuellen Informationen angezeigt werden. Dabei sind die Programmteile des Betriebsprogramms, die die Prozeduren im Zusammenhang mit dem Erfassen der Schnittstellensignalzustände, der Bildung der entsprechenden Signalzustandsinformationen und deren optischer Anzeige durchführen, in den Speichern ROM1 (FIG 2) und ROM2 (FIG 4) abgelegt.

Alternativ zu dem schaltungstechnischen Aufbau mit einem ersten Prozessor CPU1 und einem zweiten Prozessor CPU2 kann vorgesehen sein, daß das Endgerät nur einen Prozessor CPU1 aufweist, der sämtliche Funktionen des Endgerätes einschließlich integrierter Anpassungseinrichtung einschließlich der erfindungsgemäß vorgesehenen Funktionen realisiert und damit die Aufgaben des ersten und zweiten Prozessors CPU1, CPU2, wie anhand des Ausführungsbeispiels beschrieben, übernimmt.

FIG 6 zeigt die Struktur der Anzeige von Signalzustandsinformationen auf der optischen Anzeigeeinrichtung DPL. Die Anzeige besteht zunächst beispielsweise aus einer in einer ersten Zeile angeordneten Folge von Buchstabenkombinationen TM, SD, CS, DR, CD, RD, RS und TR. In einer zweiten Zeile können, zugeordnet zu den jeweiligen Buchstabenkombinationen der ersten Zeile, Markierungen, beispielsweise in Form von Rechtecken, angezeigt werden.

Die Buchstabenkombinationen haben dabei die folgenden Bedeutungen (Bezeichnung gemäß CCITT-Empfehlungen):

| | | |
|---|---|---|
| TM | Test Mode (Test Mode) | |
| SD | Sendedaten (Send Data 103) | |
| CS | Sendebereitschaft (Clear to Send 106) | |
| DR | Betriebsbereitschaft (Data Set Ready 107) | |
| CD | Empfangs-Signalpegel (Carrier Detect 109) | |
| RD | Empfangsdaten (Receive Data 104) | |
| RS | Sendeteil einschalten (Request to Send 105) | |
| TR | Übertragungsleitung einschalten (Data Terminal Ready 108) | |

Die Anzeige beispielsweise eines Rechteckes unter einer Buchstabenkombination bedeutet dabei, daß das durch die Buchstabenkombination bezeichnete Signal im Zustand "EIN" ist. Die in FIG 6 dargestellte Anzeige, bei der unter jeder Buchstabenkombination ein Rechteck angeordnet ist, entspricht dem Testbetrieb (Test Mode).

## Patentansprüche

1. Fernmeldeendgerät (T) mit einer optischen Anzeigeeinrichtung (DPL), mit mindestens einem Prozessor (CPU1, CPU2) und einer Schnittstelle (RS232) zu einer externen Datenverarbeitungseinrichtung (PC),
   **dadurch gekennzeichnet,**
   daß das Fernmeldeendgerät (T) einen ersten Prozessor (CPU1) und einen zweiten Prozessor (CPU2) aufweist, daß der erste und der zweite Prozessor (CPU1, CPU2) über einen Datenbus (80C188-Bus) miteinander verbunden sind, daß der zweite Prozessor (CPU2) Signalzustände an der Schnittstelle (RS232) abgreift und dem ersten Prozessor (CPU1) eine Signalzustandsinformation übermittelt, und daß der erste Prozessor (CPU1) die optische Anzeigeeinrichtung (DPL) mit der Signalzustandsinformation ansteuert.

2. Fernmeldeendgerät nach Anspruch 1,
   **dadurch gekennzeichnet,**
   daß das Fernmeldeendgerät (T) nur einen Prozessor (CPU1) aufweist, der Signalzustände an der Schnittstelle (RS232) abgreift, signalzustandsindividuelle Informationen bildet und diese der optischen Anzeigeeinrichtung (DPL) des Fernmeldeendgeräts (T) zuführt.

3. Fernmeldeendgerät nach einem der vorhergehenden Ansprüche,
   **dadurch gekennzeichnet,**
   daß die Schnittstelle (RS232) als RS232- bzw. als V.24-Schnittstelle ausgebildet ist und daß das Prozessorsystem (CPU1, CPU2) Signalzustände an mindestens einer Teilmenge von Schnittstelleneingängen und/oder Schnittstellenausgängen abgreift und signalzustandsindividuelle Informationen bildet.

# FIG 1

# FIG 2

# FIG 3

## FIG 4

Reset

IOM 2
Monitorkanal
B-Kanal

+5 V
isol.

80C188
CPU 2

ITA C
Port a
Port b

ROM 2
128k×8

RAM 2
8k×8

Opto
coupl.

RS232
Receiv
and
Driver

TA

PC
RS 232
connector

## FIG 5

TA
RS232

Initialization

Task
Scheduler

Interrupt
Service
Routines

K-interface
Handler

User
Control
Handler

Call
Processing

Admin
&
Maint.

Dependability

B-channel
Handler

User
Data
Interface

## FIG 6

TM SD CS DR CD RD RS TR

9